# EUROPEAN PATENT APPLICATION

(11) **EP 1 936 913 A1**
(43) Date of publication of application: **25.06.2008**
(21) Application number: 07024669.9
(22) Date of filing: 19.12.2007
(51) Int. Cl.: H04L 29/06, H04L 12/56

(54) **Method and apparatus for providing voice communication service in a wireless communications system**

(30) Priority: 19.12.2006 US 875539 P
(71) Applicant: Innovative Sonic Limited, Tortola (VG)
(72) Inventor: Jiang, Sam Shiaw-Shiang, Taipei City Taiwan (TW)
(74) Representative: Schaeberle, Steffen

(57) **Abstract**

A method for providing voice communication service in a receiver of a wireless communications system includes activating a Hybrid Automatic Repeat Request, called HARQ hereinafter, process (302), receiving a first voice packet and storing the first voice packet in a buffer by the HARQ process (304), receiving a second voice packet and storing the second voice packet in the buffer before the first voice packet is successfully received by the HARQ process (306), and delivering the first voice packet to an upper layer with an indication to indicate that the first voice packet includes erroneous data (308).

## Description

This application claims the benefit of U.S. Provisional Application No. 60/875,539, filed on Dec 19, 2006 and entitled "A scheme of header compression and ciphering in PDCP layer", the contents of which are incorporated herein by reference.

The present invention relates to a method and apparatus for providing voice communication service in a wireless communications system according to the pre-characterizing clauses of claims 1 and 9.

The third generation mobile telecommunications system (called 3G system) provides high frequency spectrum utilization, universal coverage, and high quality, high-speed multimedia data transmission, and also meets all kinds of QoS requirements simultaneously, providing diverse, flexible, two-way transmission services and better communication quality to reduce transmission interruption rates. However, due to demand for high-speed and multimedia applications, the next generation mobile telecommunications technology and related communication protocols have been developed.

Long Term Evolution wireless communications system (LTE system), an advanced high-speed wireless communications system established upon the 3G mobile telecommunications system (e.g. Universal Mobile Telecommunications System), supports only packet-switched transmission, and tends to implement both Medium Access Control (MAC) layer and Radio Link Control (RLC) layer in one single communication site, such as in Node B alone rather than in Node B and RNC (Radio Network Controller) respectively, so that the system structure becomes simple.

The Universal Mobile Telecommunications System (UMTS) provides services of voice and packet transmission over a circuit-switched (CS) core network and a packet-switched (PS) core network. In comparison, the LTE system provides the same services over only the PS core network. Such transition simplifies the system structure, but induces different problems.

In UMTS, the voice channel is operated in a Transparent Mode (TM), providing voice communication service over the CS core network. In TM, voice data packets with bit corruption, which fail in Cyclic Redundancy Check (CRC), are not discarded but delivered to the upper layer with a CRC error indication. As a result, for the voice decoder in the receiver, preserving data packets with bit corruption can recover voice with a quality better than discarding those data packets with bit corruption.

In comparison, in the LTE system, voice application is transported over the PS core network and IP network. The PS voice application is also known as VoIP (voice over internet protocol) application. In addition, in the LTE system, the MAC layer provides Hybrid Automatic Repeat Request (HARQ) procedures on all transmissions as possible, so as to enhance transmission efficiency. Therefore, VoIP application is transported with HARQ. In such a situation, if the voice data packets are erroneous, or fail in CRC for example, the packets with bit corruption are discarded and will not be delivered to the upper layer.

In short, since the LTE system uses HARQ when transmitting voice data packets, the receiver will discard voice data packets with bit corruption and will not deliver them the upper layer, causing waste of voice data.

This in mind, the present invention aims at providing a method and apparatus for providing voice communication service in a wireless communications, for effectively utilizing the contents of the voice packets with bit corruption, and enhancing voice quality.

This is achieved by a method and apparatus for providing voice communication service in a wireless communications system according to claims 1 and 9. The dependent claims pertain to corresponding further developments and improvements.

As will be seen more clearly from the detailed description following below, the claimed method for providing voice communication service in a receiver of a wireless communications system comprises activating a Hybrid Automatic Repeat Request, called HARQ hereinafter, process, receiving a first voice packet and storing the first voice packet in a buffer by the HARQ process, receiving a second voice packet and storing the second voice packet in the buffer before the first voice packet is successfully received by the HARQ process, and delivering the first voice packet to an upper layer with an indication to indicate that the first voice packet comprises erroneous data.

In the following, the invention is further illustrated by way of example, taking reference to the accompanying drawings. Thereof
Fig. 1 is a function block diagram of a wireless communications device.
Fig. 2 is a diagram of program code of Fig. 1.
Fig. 3 is a flowchart of a process according to the embodiment of the present invention.

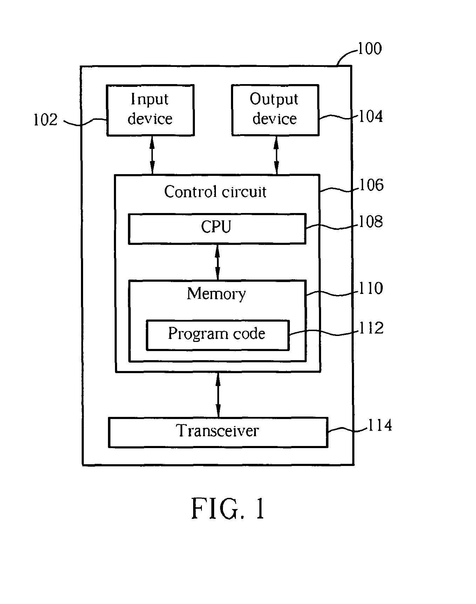

Please refer to Fig. 1, which is a functional block diagram of a communications device 100 in a wireless communications system. The wireless communications system is preferably the LTE system. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

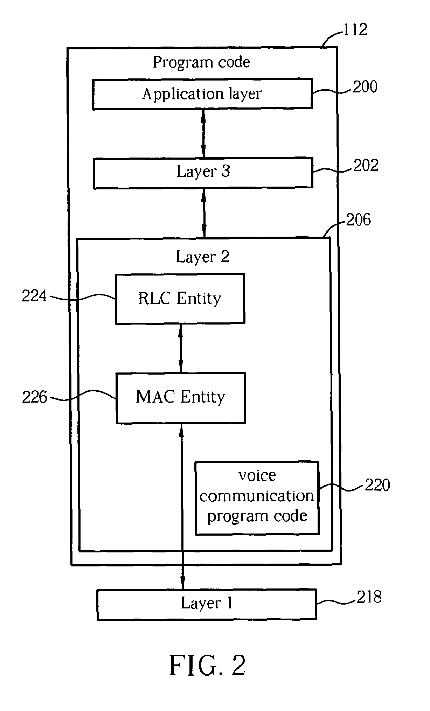

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. The Layer 2 206 comprises two sub-layers: a radio link control (RLC) entity 224 and a media access control (MAC) entity 226. A primary function of the RLC entity 224 is providing different transmission quality processing, performing segmentation, reassembly, concatenation, padding, retransmission, sequence check, and duplication detection on transmitted data or control instructions based on different transmission quality requirements. The MAC entity 226 can match packets received from different logic channels of the RLC entity 224 to common, shared, or dedicated transport channels according to radio resource allocation commands of the Layer 3 (RRC layer) 202, for performing channel mapping, multiplexing, transport format selection, or random access control.

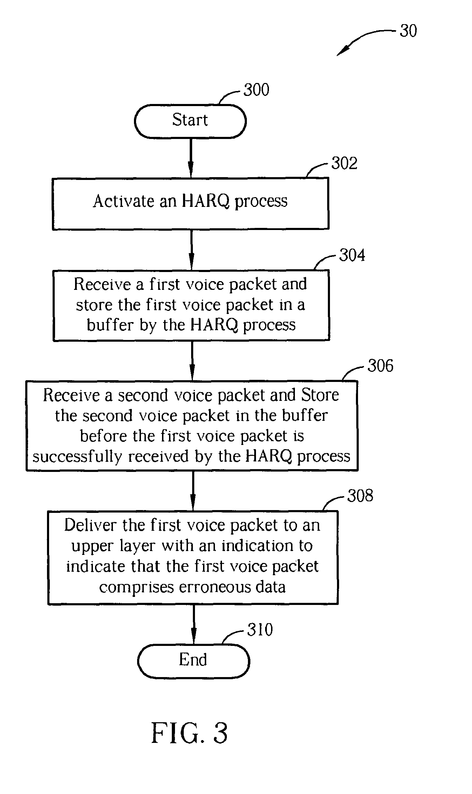

The LTE system supports only PS transmission, such that the program code 112 provides voice communication service by VoIP application, and uses HARQ when transmitter voice data packets, in order to enhance transmission efficiency. In such a situation, the embodiment of the present invention provides a voice communication program code 220 to effectively utilize voice data, and to enhance voice quality. Please refer to Fig. 3, which illustrates a schematic diagram of a process 30. The process 30 is utilized for providing voice communication service in a wireless communications system, and can be compiled in to the voice communication program code 220. The process 30 comprises the following steps:
Step 300: Start.
Step 302: Activate an HARQ process.
Step 304: Receive a first voice packet and store the first voice packet in a buffer by the HARQ process.
Step 306: Receive a second voice packet and Store the second voice packet in the buffer before the first voice packet is successfully received by the HARQ process.
Step 308: Deliver the first voice packet to an upper layer with an indication to indicate that the first voice packet comprises erroneous data.
Step 310: End.

According to the process 30, in the HARQ process, if a first voice packet stored in the buffer comprises erroneous data (for example, the first voice packet fails in CRC), and the receiver receives a second voice packet, which is a new transmission, the embodiment of the present invention delivers the first voice packet to the upper layer with an indication to indicate that the first voice packet comprises erroneous data. In other words, when a voice packet comprises erroneous data and is to be discarded from the buffer, the embodiment of the present invention delivers the voice packet to the upper layer, so as to process the contents of the voice packet by the upper layer. As a result, the upper layer can process the contents of the voice packet, and determine to discard or utilize the voice packet accordingly.

Preferably, if the first voice packet comprises a compressed header, the embodiment of the present invention can further perform decompression on the compressed header to get a decompressed header and a third voice packet, and perform a check procedure, such as CRC, on the decompressed header, or check if a field of the decompressed header comprises a value that is not allowed, to determine whether the decompressed header conforms to a predefined requirement. If the result of the check procedure indicates that the decompressed header conforms to the predefined requirement, the upper layer preferably delivers the third voice packet to another upper layer with another indication to indicate that the third voice packet comprises erroneous data. Oppositely, if the result of the check procedure indicates that the decompressed header does not conform to the predefined requirement, the upper layer preferably discard the first voice packet as never received.

Similarly, if the first voice packet is ciphered, the embodiment of the present invention can perform deciphering on the first voice packet before the upper layer performs decompression on the header of the first voice packet.

Therefore, via the process 30, for voice packets with bit corruption, which is transmitted by HARQ, the embodiment of the present invention delivers the packets with bit corruption to the upper layer, and processes the packets by the upper layer, so as to achieve a better voice quality. In comparison, for voice packets with bit corruption, the prior art discards the packets with bit corruption and does not deliver them to the upper layer, causing waste of voice data. In other words, when providing voice communication service, the embodiment of the present invention can effectively utilize voice data packets with bit corruption, so as to enhance voice quality.

In summary, for voice packets with bit corruption, the embodiment of the present invention delivers the voice packets with bit corruption to the upper layer, so as to effectively utilize the contents of the voice packets with bit corruption, and enhance voice quality.

## Claims

1. A method for providing voice communication service in a receiver of a wireless communications system comprising:
activating a Hybrid Automatic Repeat Request, called HARQ hereinafter, process (302);
receiving a first voice packet and storing the first voice packet in a buffer by the HARQ process (304); and
receiving a second voice packet and storing the second voice packet in the buffer before the first voice packet is successfully received by the HARQ process (306);
**characterized by** delivering the first voice packet to an upper layer with an indication to indicate that the first voice packet comprises erroneous data (308).

2. The method of claim 1, **characterized in that** the first voice packet is determined to be not successfully received when the first voice packet fails in a first Cyclic Redundancy Check.

3. The method of claim 2, **characterized in that** the first Cyclic Redundancy Check is performed in a physical layer.

4. The method of claim 1, **characterized in that** the first voice packet comprises a compressed header, and the method further comprises:
performing a decompression procedure on the compressed header to get a decompressed header and a third voice packet by the upper layer;
performing a check procedure on the decompressed header to determine whether the decompressed header conforms to a predefined requirement by the upper layer; and
discarding the first voice packet as never received when a result of the check procedure indicates that the decompressed header does not conform to the predefined requirement by the upper layer.

5. The method of claim 4, **characterized in that** performing the check procedure on the decompressed header to determine whether the decompressed header conforms to the predefined requirement by the upper layer is performing a second Cyclic Redundancy Check on the decompressed header to determine whether the decompressed header conforms to the predefined requirement by the upper layer.

6. The method of claim 4, **characterized in that** performing the check procedure on the decompressed header to determine whether the decompressed header conforms to the predefined requirement by the upper layer is checking if a field of the decompressed header comprises a value that is not allowed to determine whether the decompressed header conforms to the predefined requirement by the upper layer.

7. The method of claim 4 further **characterized by** comprising delivering the third voice packet to another upper layer with another indication to indicate that the third voice packet comprises erroneous data when the result of the check procedure indicates that the decompressed header conforms to the predefined requirement by the upper layer.

8. The method of claim 4, **characterized in that** the first voice packet is ciphered, and the method further comprises:
performing a deciphering procedure on the first voice packet before performing the decompression procedure by the upper layer.

9. A communications device (100) for enhancing voice quality when providing voice communication service in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
activating a Hybrid Automatic Repeat Request, called HARQ hereinafter, process (302);
receiving a first voice packet and storing the first voice packet in a buffer by the HARQ process (304); and
receiving a second voice packet and storing the second voice packet in the buffer before the first voice packet is successfully received by the HARQ process (306);
and is **characterized by** comprising:
delivering the first voice packet to an upper layer with an indication to indicate that the first voice packet comprises erroneous data (308).

10. The communications device of claim 9, **characterized in that** the first voice packet is determined to be not successfully received when the first voice packet fails in a first Cyclic Redundancy Check.

11. The communications device of claim 9, **characterized in that** the first Cyclic Redundancy Check is performed in a physical layer.

12. The communications device of claim 9, **characterized in that** the first voice packet comprises a compressed header, and the program code further comprises:
performing a decompression procedure on the compressed header to get a decompressed header and a third voice packet by the upper layer;
performing a check procedure on the decompressed header to determine whether the decompressed header conforms to a predefined requirement by the upper layer; and
discarding the first voice packet as never received when a result of the check procedure indicates that the decompressed header does not conform to the predefined requirement by the upper layer.

13. The communications device of claim 12, **characterized in that** performing the check procedure on the decompressed header to determine whether the decompressed header conforms to the predefined requirement by the upper layer is performing a second Cyclic Redundancy Check on the decompressed header to determine whether the decompressed header conforms to the predefined requirement by the upper layer.

14. The communications device of claim 12, **characterized in that** performing the check procedure on the decompressed header to determine whether the decompressed header conforms to the predefined requirement by the upper layer is checking if a field of the decompressed header comprises a value that is not allowed to determine whether the decompressed header conforms to the predefined requirement by the upper layer.

15. The communications device of claim 12, **characterized in that** the program code further comprises delivering the third voice packet to another upper layer with another indication to indicate that the third voice packet comprises erroneous data when the result of the check procedure indicates that the decompressed header conforms to the predefined requirement by the upper layer.

16. The communications device of claim 12, **characterized in that** the first voice packet is ciphered, and the program code further comprises:
performing a deciphering procedure on the first voice packet before performing the decompression procedure by the upper layer.
